# EUROPEAN PATENT APPLICATION

(11) **EP 3 396 537 A1**
(43) Date of publication of application: **31.10.2018**
(21) Application number: 18164447.7
(22) Date of filing: 28.03.2018
(51) Int. Cl.: G06F 9/4401, G06F 8/60

(54) **METHOD OF AUTOMATICALLY BOOTSTRAPPING AND UPDATING DEVICES IN ENVIRONMENT, SYSTEM AND COMPUTER READABLE MEDIUM CONFIGURED TO PERFORM SAME**

(30) Priority: 28.04.2017 US 201715581559
(71) Applicant: Siemens Healthcare GmbH, 91052 Erlangen (DE)
(72) Inventor: Dominick, Lutz, 91330 Eggolsheim (DE); Ukis, Vladyslav, 90489 Nürnberg (DE)

(57) **Abstract**

Method of automatically bootstrapping and updating devices in environment, system and computer readable medium configured to perform same.

A method may include generating a device specific context vector for a device based on a data sheet associated with the device and agiles; generating a production based on the context vector; and automatically configuring data connections associated with the device based on the device specific context vector and the production, the data connections enabling the device to communicate in a network.

## Description

Method of automatically bootstrapping and updating devices in environment, system and computer readable medium configured to perform same.

One or more example embodiments relate to methods, systems, and/or non-transitory computer readable mediums configured to facilitate automatically bootstrapping devices, for example, medical devices, into an existing environment.

In an environment, such as a hospital, various devices that produce and exchange data may be installed in different systems and may utilize different application systems. As such, the devices in the environment may need to be bootstrapped to setup connectivity between these devices and the rest of the environment, and the devices may need to be updated afterwards due to maintenance tasks. Bootstrapping may include various processes to initialize (e.g., configure and/or calibrate) a new device to be operational within an environment.

Standards and regulations such as Digital Imaging and Communications in Medicine (DICOM) and Integrating the Healthcare Enterprise (IHE), attempt to standardize communication and data structures in the medical field. Further, vendors may also utilize specific in-house standards (e.g., remote serviceability of devices) to attempt to standardize communication and data structures. These standards may be used when bootstrapping the device. However, conventionally, such bootstrapping may be a manual procedure and/or require manual intervention due to barriers created by differences in ownership of the various devices and differences in semantics required to layout and connect the various devices. These manual procedures may need to be repeated at various ones of the devices that communicate with the device being added to the environment. Further, manual intervention may yield incomplete results due to, for example, the size of the network, number of devices, and complexity of the various task to be performed.
Therefore, conventionally, due to the execution of various manual procedures and/or manual intervention, it may be relatively difficult and/or expensive to add new devices and/or upgrade existing devices in an environment.

So it is the problem of the invention to provide a method and a system for automatically adding and/or upgrading devices in an environment in an easy and cheap way.

The problem is solved by a method for automatically configuring data connections, by a configuration system, by a computer program product, and by a computer-readable medium according to the independent claims.

Particularly advantageous embodiments and features of the invention are given by the dependent claims and the description. Features of different claim categories may be combined as appropriate to give further embodiments not described herein.

In the following the solution according to the invention is described with respect to the claimed configuration system as well as with respect to the claimed method. Features, advantages or alternative embodiments herein can be assigned to the other claimed objects and vice versa. In other words, claims for the configuration system can be improved with features described or claimed in the context of the method. In this case, the functional features of the method are embodied by objective units of the configuration system.

This section provides a general summary of the disclosure, and is not a comprehensive disclosure of its full scope or all of its features.

In one aspect the invention relates to a method for automatically configuring data connections. The method comprises generating a device specific context vector for a device based on a data sheet associated with the device and agiles; generating a production based on the device specific context vector; and automatically configuring data connections associated with the device based on the device specific context vector and the production, the data connections enabling the device to communicate in a network.

According to a further aspect of the invention the production contains source code executable within an environment associated with the device to configure the data connections.

According to a further aspect of the invention the source code is executable by an onsite server within the environment, the source code instructing the onsite server to perform tasks associated with configuring the data connections.

According to a further aspect of the invention the source code is executable directly on the device within the environment by opening at least one port on the device to allow remote access by one of the onsite server and the remote server.

According to a further aspect of the invention the device specific context vector is a vector that bundles information to an instance associated with the device, the information including parameters that identify the device and configure the data connections associated with the device, and the agiles are a declaration of tasks associated with performing an operation on a device type associated with the device.

According to a further aspect of the invention the declaration of tasks are established for the device type and the operation prior to generating the device specific context vector.

According to a further aspect of the invention the automatically configuring includes updating device specific context vectors for other devices that depend on the device.

According to a further aspect of the invention the method further includes querying a Dynamic Host Configuration Protocol (DHCP) server for a list of addresses associated with devices; determining whether to configure the data connections associated with the device based at least on the list of addresses; and querying the device for the data sheet, if the determining determines to configure the data connections associated with the device.

According to a further aspect of the invention the method further includes receiving the data sheet from the device; storing the data sheet in a memory; and analyzing the data sheet to determine at least a device type associated with the device and data connectivity types supported by the device, wherein the generating generates the device specific context vector based on the device type and the data connectivity types determined from the data sheet.

According to a further aspect of the invention the method further includes automatically determining which of a plurality of connectivity options yields the data sheet from the device; and further analyzing the data sheet to determine remote communication standards including one or more of data types, message types, and operations supported by the device.

The invention relates in one aspect to a configuration system for automatically configuring data connections, comprising a processor; and a memory configured to store computer readable code therein that, when executed by the processor, configures the processor to, generate a device specific context vector for a device based on a data sheet associated with the device and agiles; generate a production based on the device specific context vector; and automatically configure data connections associated with the device based on the device specific context vector and the production, the data connections enabling the device to communicate in a network.

In particular the configuration system can be configured to execute the method for automatically configuring data connections according to the invention and its aspects. The configuration system is configured to execute the method for for automatically configuring data connections and its aspects by a processor and a memory of the local transmission unit being configured to execute the respective method steps.

The configuration system can comprise hardware and/or software. The hardware can be, for example, a processor system, a memory system and combinations thereof. The hardware can be configurable by the software and/or be operable by the software.

According to a further aspect of the invention the production contains source code executable within an environment associated with the device to configure the data connections.

According to a further aspect of the invention the source code is executable by an onsite server within the environment, the source code instructing the onsite server to perform tasks associated with configuring the data connections.

According to a further aspect of the invention the source code is executable directly on the device within the environment by opening at least one port on the device to allow remote access by one of the onsite server and the remote server.

According to a further aspect of the invention the device specific context vector is a vector that bundles information to an instance associated with the device, the information including parameters that identify the device and configure the data connections associated with the device, and the agiles are a declaration of tasks associated with performing an operation on a device type associated with the device, the declaration of tasks being established for the device type and the operation prior to generating the device specific context vector.

According to a further aspect of the invention the computer readable code, when executed by the processor, configures the processor to, the automatically configure the data connections by updating device specific context vectors for other devices that depend on the device.

According to a further aspect of the invention the computer readable code, when executed by the processor, further configures the processor to, query a Dynamic Host Configuration Protocol (DHCP) server for a list of addresses associated with devices; determine whether to configure the data connections associated with the device based at least on the list of addresses; and query the device for the data sheet, if the determining determines to configure the data connections associated with the device.

According to a further aspect of the invention the computer readable code, when executed by the processor, further configures the processor to, receive the data sheet from the device; store the data sheet in the memory; analyze the data sheet to determine at least a device type associated with the device and data connectivity types supported by the device; and generate the device specific context vector based on the device type and the data connectivity types determined from the data sheet.

According to a further aspect of the invention the computer readable code, when executed by the processor, configures the processor to, automatically determine which of a plurality of connectivity options yields the data sheet from the device; and further analyze the data sheet to determine remote communication standards including one or more of data types, message types, and operations supported by the device.

The invention relates in one aspect to a computer program product comprising program elements, the program elements being loadable into a memory of a configuration system, including program code sections to make the configuration system execute the method for automatically configuring data connections according to an aspect of the invention when the program elements are executed in said configuration system.

The invention relates in one aspect to a computer-readable medium, on which program code sections are saved, said program code sections being loadable into and/or executable in a configuration system to make the configuration system execute the method for automatically configuring data connections according to an aspect of the invention when the program code sections are executed in the said configuration system.

The realization of the invention by a computer program product and/or a computer-readable medium has the advantage that already existing said configuration systems can be easily adopted by software updates in order to work as proposed by the invention.

The invention relates in one aspect to a non-transitory computer readable medium, the non-transitory computer readable medium comprising computer readable code that, when executed by a processor, configures the processor to, generate a device specific context vector for a device based on a data sheet associated with the device and agiles; generate a production based on the device specific context vector; and automatically configure data connections associated with the device based on the device specific context vector and the production, the data connections enabling the device to communicate in a network.

In some example embodiments, the production contains source code executable within an environment associated with the device to configure the data connections.

In some example embodiments, the source code is executable by an onsite server within the environment, the source code instructing the onsite server to perform tasks associated with configuring the data connections.

In some example embodiments, the source code is executable directly on the device within the environment by opening at least one port on the device to allow remote access by one of an onsite server and a remote server.

In some example embodiments, the device specific context vector is a vector that bundles information to an instance associated with the device, the information including parameters that identify the device and configure the data connections associated with the device, and the agiles are a declaration of tasks associated with performing an operation on a device type associated with the device, the declaration of tasks being established for the device type and the operation prior to generating the device specific context vector.

In some example embodiments, the computer readable code, when executed by the processor, configures the processor to, automatically configure the data connections by updating device specific context vectors for other devices that depend on the device.

In some example embodiments, the computer readable code, when executed by the processor, further configures the processor to, query a Dynamic Host Configuration Protocol (DHCP) server for a list of addresses associated with devices; determine whether to configure the data connections associated with the device based at least on the list of addresses; and query the device for the data sheet, if the processor determines to configure the data connections associated with the device.

In some example embodiments, the computer readable code, when executed by the processor, further configures the processor to, receive the data sheet from the device; store the data sheet in a memory; analyze the data sheet to determine at least a device type associated with the device and data connectivity types supported by the device; and generate the device specific context vector based on the device type and the data connectivity types determined from the data sheet.

In some example embodiments, the computer readable code, when executed by the processor, configures the processor to, automatically determine which of a plurality of connectivity options yields the data sheet from the device; and further analyze the data sheet to determine remote communication standards including one or more of data types, message types, and operations supported by the device.

Further areas of applicability will become apparent from the description provided herein. The description and specific examples in this summary are intended for purposes of illustration only and are not intended to limit the scope of the present disclosure. In particular, also the following description in context of the drawings does not limit the invention on the contained embodiments. Same components or parts can be labeled with the same reference signs in different figures. In general the figures are not for scale.

Example embodiments will be described in more detail with regard to the figures, wherein like reference numerals refer to like parts throughout the various figures unless otherwise specified, and wherein:
FIG. 1 illustrates a system according to at least some example embodiments;
FIG. 2 illustrates a server according to at least some example embodiments;
FIG. 3 illustrates a more detailed functional diagram of a portion of a remote server according to at least some example embodiments;
FIG. 4 is a flowchart illustrating a method of automatically configuring data connections associated with a device according to at least some example embodiments;
FIG. 5 is a flowchart illustrating a method of generating a device specific context vector according to at least some example embodiments;
FIG. 6 is a flowchart illustrating a method of generating device specific Digital Imaging and Communications in Medicine (DICOM) configuration according to at least some example embodiments;
FIG. 7 is a flowchart illustrating a method of generating productions for use cases based on a context vector according to at least some example embodiments;
FIG. 8 is a flowchart illustrating a method of merging agiles into a production according to at least some example embodiments; and
FIG. 9 is a signal flow diagram illustrating an example of a method of automatically bootstrapping and updating devices according to at least some example embodiments.

It should be noted that these figures are intended to illustrate the general characteristics of methods and/or structure utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments.

One or more example embodiments will be described in detail with reference to the accompanying drawings. Example embodiments, however, may be embodied in various different forms, and should not be construed as being limited to only the illustrated embodiments. Rather, the illustrated embodiments are provided as examples so that this disclosure will be thorough and complete, and will fully convey the concepts of this disclosure to those skilled in the art. Accordingly, known processes, elements, and techniques, may not be described with respect to some example embodiments. Unless otherwise noted, like reference characters denote like elements throughout the attached drawings and written description, and thus descriptions will not be repeated.

Although the terms "first," "second," "third," etc., may be used herein to describe various elements, components, regions, layers, and/or sections, these elements, components, regions, layers, and/or sections, should not be limited by these terms. These terms are only used to distinguish one element, component, region, layer, or section, from another region, layer, or section. Thus, a first element, component, region, layer, or section, discussed below may be termed a second element, component, region, layer, or section, without departing from the scope of this disclosure.

Spatially relative terms, such as "beneath," "below," "lower," "under," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below," "beneath," or "under," other elements or features would then be oriented "above" the other elements or features. Thus, the example terms "below" and "under" may encompass both an orientation of above and below. The device may be otherwise oriented (rotated 90 degrees or at other orientations) and the spatially relative descriptors used herein interpreted accordingly. In addition, when an element is referred to as being "between" two elements, the element may be the only element between the two elements, or one or more other intervening elements may be present.

As used herein, the singular forms "a," "an," and "the," are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups, thereof. As used herein, the term "and/or" includes any and all combinations of one or more of the associated listed items. Expressions such as "at least one of," when preceding a list of elements, modify the entire list of elements and do not modify the individual elements of the list. Also, the term "exemplary" is intended to refer to an example or illustration.

When an element is referred to as being "on," "connected to," "coupled to," or "adjacent to," another element, the element may be directly on, connected to, coupled to, or adjacent to, the other element, or one or more other intervening elements may be present. In contrast, when an element is referred to as being "directly on," "directly connected to," "directly coupled to," or "immediately adjacent to," another element there is no intervening element present.

Unless otherwise defined, all terms (including technical and scientific terms) used herein have the same meaning as commonly understood by one of ordinary skill in the art to which example embodiments belong. Terms, such as those defined in commonly used dictionaries, should be interpreted as having a meaning that is consistent with their meaning in the context of the relevant art and/or this disclosure, and should not be interpreted in an idealized or overly formal sense unless expressly so defined herein.

Example embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail below. Although discussed in a particularly manner, a function or operation specified in a specific block may be performed differently from the flow specified in a flowchart, flow diagram, etc. For example, functions or operations illustrated as being performed serially in two consecutive blocks may actually be performed simultaneously, or in some cases be performed in reverse order.

Units and/or devices according to one or more example embodiments may be implemented using hardware, software, and/or a combination thereof. For example, hardware devices may be implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner.

Software may include a computer program, program code, instructions, or some combination thereof, for independently or collectively instructing or configuring a hardware device to operate as desired. The computer program and/or program code may include program or computer-readable instructions, software components, software modules, data files, data structures, and/or the like, capable of being implemented by one or more hardware devices, such as one or more of the hardware devices mentioned above. Examples of program code include both machine code produced by a compiler and higher level program code that is executed using an interpreter.

For example, when a hardware device is a computer processing device (e.g., a processor, Central Processing Unit (CPU), a controller, an arithmetic logic unit (ALU), a digital signal processor, a microcomputer, a microprocessor, etc.), the computer processing device may be configured to carry out program code by performing arithmetical, logical, and input/output operations, according to the program code. Once the program code is loaded into a computer processing device, the computer processing device may be programmed to perform the program code, thereby transforming the computer processing device into a special purpose computer processing device. In a more specific example, when the program code is loaded into a processor, the processor becomes programmed to perform the program code and operations corresponding thereto, thereby transforming the processor into a special purpose processor.

Software and/or data may be embodied permanently or temporarily in any type of machine, component, physical or virtual equipment, or computer storage medium or device, capable of providing instructions or data to, or being interpreted by, a hardware device. The software also may be distributed over network coupled computer systems so that the software is stored and executed in a distributed fashion. In particular, for example, software and data may be stored by one or more computer readable recording mediums, including the tangible or non-transitory computer-readable storage media discussed herein.

According to one or more example embodiments, computer processing devices may be described as including various functional units that perform various operations and/or functions to increase the clarity of the description. However, computer processing devices are not intended to be limited to these functional units. For example, in one or more example embodiments, the various operations and/or functions of the functional units may be performed by other ones of the functional units. Further, the computer processing devices may perform the operations and/or functions of the various functional units without sub-dividing the operations and/or functions of the computer processing units into these various functional units.

Units and/or devices according to one or more example embodiments may also include one or more storage devices. The one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof, for one or more operating systems and/or for implementing the example embodiments described herein. The computer programs, program code, instructions, or some combination thereof, may also be loaded from a separate computer readable storage medium into the one or more storage devices and/or one or more computer processing devices using a drive mechanism. Such separate computer readable storage medium may include a Universal Serial Bus (USB) flash drive, a memory stick, a Blu-ray/DVD/CD-ROM drive, a memory card, and/or other like computer readable storage media. The computer programs, program code, instructions, or some combination thereof, may be loaded into the one or more storage devices and/or the one or more computer processing devices from a remote data storage device via a network interface, rather than via a local computer readable storage medium. Additionally, the computer programs, program code, instructions, or some combination thereof, may be loaded into the one or more storage devices and/or the one or more processors from a remote computing system that is configured to transfer and/or distribute the computer programs, program code, instructions, or some combination thereof, over a network. The remote computing system may transfer and/or distribute the computer programs, program code, instructions, or some combination thereof, via a wired interface, an air interface, and/or any other like medium.

The one or more hardware devices, the one or more storage devices, and/or the computer programs, program code, instructions, or some combination thereof, may be specially designed and constructed for the purposes of the example embodiments, or they may be known devices that are altered and/or modified for the purposes of example embodiments.

A hardware device, such as a computer processing device, may run an operating system (OS) and one or more software applications that run on the OS. The computer processing device also may access, store, manipulate, process, and create data in response to execution of the software. For simplicity, one or more example embodiments may be exemplified as one computer processing device; however, one skilled in the art will appreciate that a hardware device may include multiple processing elements and multiple types of processing elements. For example, a hardware device may include multiple processors or a processor and a controller. In addition, other processing configurations are possible, such as parallel processors.

Although described with reference to specific examples and drawings, modifications, additions and substitutions of example embodiments may be variously made according to the description by those of ordinary skill in the art. For example, the described techniques may be performed in an order different with that of the methods described, and/or components such as the described system, architecture, devices, circuit, and the like, may be connected or combined to be different from the above-described methods, or results may be appropriately achieved by other components or equivalents.

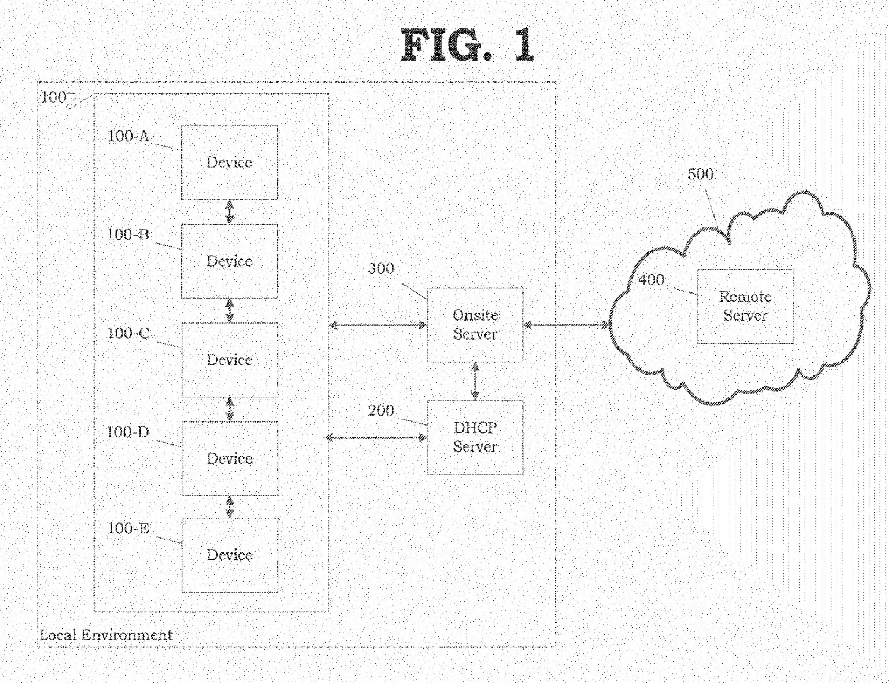

FIG. 1 illustrates a system according to example embodiments.

Referring to FIG. 1, a system may include a plurality of devices 100, a Dynamic Host Configuration Protocol (DHCP) server 200, an onsite server 300, and a remote server 400.

The devices 100 may be connected to the DHCP server 200 and/or the onsite server 300. In some example embodiments, there may be a plurality of devices 100 connected the DHCP server 200 and/or the onsite server 300. For example, devices 100-A to 100-E.

The devices 100 may be medical servers installed at medical facilities, and may include a back-end that processes data and a front-end that provides an interface to users of the devices 100, where the back-end may be a server and the front end may be a client device, such as a personal computer.

For example, the devices 100 may include various modalities such as computed tomography (CT) scanners, magnetic resonance imaging (MRI) scanners, ultrasound systems, digital radiography (DR) systems, digital X-ray (DX) systems, positron emission tomography (PET) systems, single-photon emission computerized tomography (SPECT) scanners, nuclear imaging systems, and/or other modalities.

Further, the devices 100 may include a picture archiving and communication system (PACS), an advanced visualization server, a health Level Seven International (HL7) server, a hospital information system (HIS), a camera device for printing of film sheets, etc.

The DHCP server 200 may automatically assign Internet Protocol (IP) addresses to the devices 100 from among a defined range of numbers (i.e., a scope) configured for the system.

The onsite server 300 may be connected to the remote server 400 over the internet, and may be connected to the devices 100 over, for example, a local area network (LAN). The onsite server 300 may be configured to act as a bridge to exchange data between the remote server 400 and the devices 100.

The remote server 400 may be configured to remotely bootstrap newly added ones of the devices 100 into the system.

In some example embodiments, as illustrated in FIG. 1, the devices 100, the DHCP server 200 and the onsite server 300 may be within a local (e.g., a hospital) environment, and the remote server 400 may be within a cloud 500. However, example embodiments are not limited thereto.

The cloud 500 may represent a computing paradigm having a shared pool of converged infrastructure that provides devices 100 with various capabilities to store and process their data in a third-party data center. The remote server 400 within the cloud 500 may represent one or more physical servers or virtual machines (VM) that may be dynamically reallocated per demand. While FIG. 1 illustrates the cloud 500 as containing the remote server 400, the cloud 500 may include other additional elements for proper operation and/or utilization of the cloud 500.

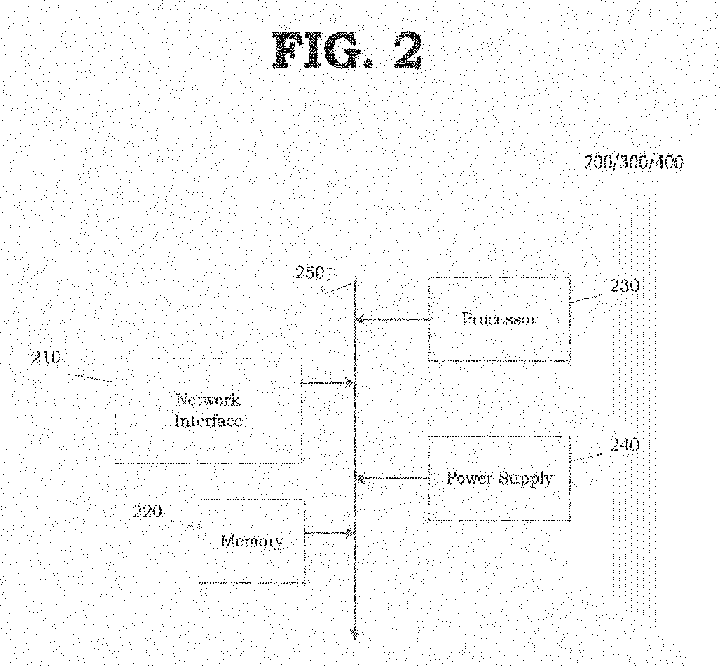

FIG. 2 illustrates a server according to example embodiments.

Referring to FIG. 2, each of the DHCP server 200, the onsite server 300, and the remote server 400 may include, for example, a network interface 210, a memory 220, a processor 230, a power supply 240 and a data bus 250.

One or more of the network interface 210, memory 220, and processor 230 may be adapted to send data and/or receive data to/from one another using the data bus 250. Further, the network interface 210, memory 220, and processor 230 may receive operating power from the power supply 240.

The network interface 210 may include a port to receive and/or transmit signals, and a transmitter and/or a receiver. The transmitter may include hardware and any necessary software for transmitting signals including, for example, data signals, and control signals, in the network environment.
The receiver may include hardware and any necessary software for receiving signals including, for example, data signals and control signals.

The memory 220 may include any device capable of storing data including magnetic storage, flash storage, etc.

The processor 230 may include any device capable of processing data including, for example, a microprocessor configured to carry out specific operations based on input data, or capable of executing instructions included in computer readable code. The computer readable code may be stored on, for example, the memory 220.

In some example embodiments, the devices 100 may be logically and/or physically partitioned into a back-end device and a front-end device (not illustrated). In such embodiments, each of the back-end device and front-end device may include their own respective network interface 210, memory 220, processor 230, power supply 240 and data bus 250.

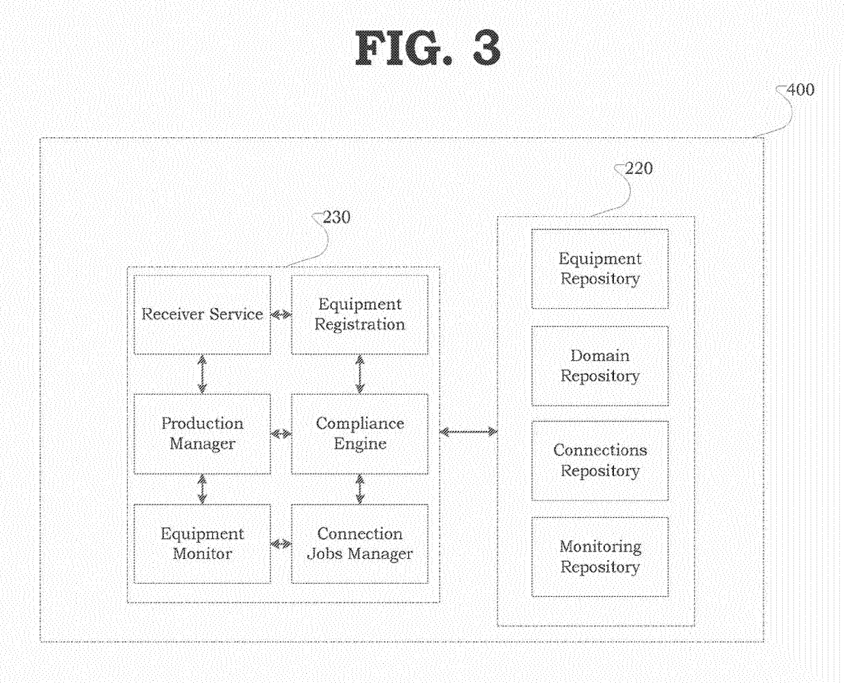

FIG. 3 illustrates a more detailed functional diagram of a portion of a remote server according to at least some example embodiments.

Referring to FIG. 3, the memory 220 included in the remote server 400 may store one or more of an equipment repository, a domain repository, a connections repository and a monitoring repository.

For example, the equipment repository may store vendor specific data sheets for each device 100, and auto-generated device context vectors for each device 100.

The data sheet may be one or more documents that describe the technical features of the device 100, and the setup requirements for the device 100 (e.g. transfer capabilities, data connections, and other information used to determine how to connect the device 100 to a network). The data sheet be shipped from the vendor with the device 100, and may be stored on the device 100 by either the vendor or, for example, by the IT administrator of the local environment. The device context vector may be an (extensible Markup Language) XML data structure containing details regarding the device 100 (e.g., device type, unique device identifier, device's IP address, link to the device data sheet, link to the connectivity option to load the data sheet from the device 100, links to agiles that are defined for the device 100, links to productions that have been generated for the device 100, links to (e.g., DICOM) connection configuration data structures that have been generated for the device 100 used for recognizing each device uniquely and capturing the outcomes of automated actions on the device 100).

The domain repository may store desired (or, alternatively, pre-configured) templates (both data structures and source code) for agiles, device context vectors, productions. Further, the domain repository may store schema templates for data structures according to domain standards such as network connections based on DICOM and HL7 and IHE profiles (e.g., for the generation of the device specific configuration of remote connections). The domain repository may also store desired (or, alternatively, pre-configured) device connectivity options in the form of data structures and source code for automatically establishing technical remote connections to the devices 100 in order to load the data sheet from the devices 100. These connectivity options may include DICOM, Web Access to DICOM Persistent Object) (WADO) services, Lightweight Directory Access Protocol) LDAP connections, File Transfer Protocol (FTP) connections, having standardized Transmission Control Protocol/Internet Protocol (TCP/IP) ports; desired (or, alternatively, pre-configured) information about the hospital network (e.g., what network segments map to what hospital department), or the like. The domain repository may also store data structures for various vendor specific device connections and vendor specific remote service centers.

Still referring to FIG. 3, the connections repository may store the generated agiles and the generated productions.

The agiles may contain initial program code and data structures and, optionally, other device types that are involved in an operation to be performed on the device 100 (e.g., initial bootstrapping into the network, relocation into a different hospital department, software upgrades from a vendor).

These initial agiles may be uploaded into the connection repository, for example, during the installation of the program or at any time later. The agile may be, for example, specific to one type of a device 100 (e.g., CT scanner) and may be specific to an operation to be performed on the device 100.

From the initial agiles, for a concrete one of the devices 100, concrete agiles of the required types of changes are created, and thereby agiles generate their internal device specific program code and data structures from the concrete device and further devices that the agile has defined to participate in the type of change. For example, the initial agile may describe a use case (e.g., task) for a first one of the devices 100, and may be modified to generate the concrete agile based on a second one of the devices 100 that are in communication with the first one of the devices 100.

Still referring to FIG. 3, the monitoring repository may store additional data temporarily used to execute internal procedures. For example, the connections repository may store data indicating which productions are currently being executed on the hospital network, the network addresses of the devices 100, and the recognition state of these devices 100 (e.g., which of the device 100 are recognized medical devices, and which of the devices 100 are unrecognized devices).

The processor 230 included in the remote server 400 may be configured to execute instructions that configure the processor 230 the perform the functions of one or more of a receiver service, an equipment registration, a production manager, a compliance engine, an equipment monitor and a connections job manager.

For example, when performing the functions of the receiver service, the processor 230 may transfer messages and data between the cloud 500 and the local environment.

When performing the functions of the equipment registration, the processor 230 may search the equipment repository for an existing device specific context vector for a given network address, and store generated device specific context vectors in the equipment repository.

When performing the functions of the production manager, the processor 230 may execute the productions from the connections repository (e.g., for the creation of a new connection between two of the devices 100) by applying the device specific and auto-generated productions on the devices 100, and transmitting the source code to the onsite server 300, which acts as a gate to the hospital network.

When performing the functions of the compliance engine, the processor 230 may query the DHCP server 200 for a list of the current network addresses (e.g., the local addresses within the hospital network) of the devices 100, store the list in the monitoring repository, compare the new list against a former list to detect gaps and/or changes, create triggers (e.g., to bootstrap or update one or more of the devices 100) based on the gaps and changes, and generate and store device specific agiles, context vectors, and productions associated with bootstrapping or updating the relevant devices 100.

The processor 230 may be triggered to perform the functions of the equipment monitor to detect if the devices 100 still exist in the network, based on network addresses or device context vectors. The processor 230 may detect if the devices 100 exist in the network by for example, detecting whether the IP address in each device context vector is present in the downloadable list of IP addresses, e.g. from the DHCP server, and detecting whether the device 100 is reachable on this IP address by performing a network connection test such as a 'ping IP' command.

The processor 230 may be triggered to perform the functions of the connections job manager by the productions manager, to start, stop and maintain the status of jobs associated with running the productions on the local environment. The status of the jobs may be, for example, ready for start, running, finished, or failed.

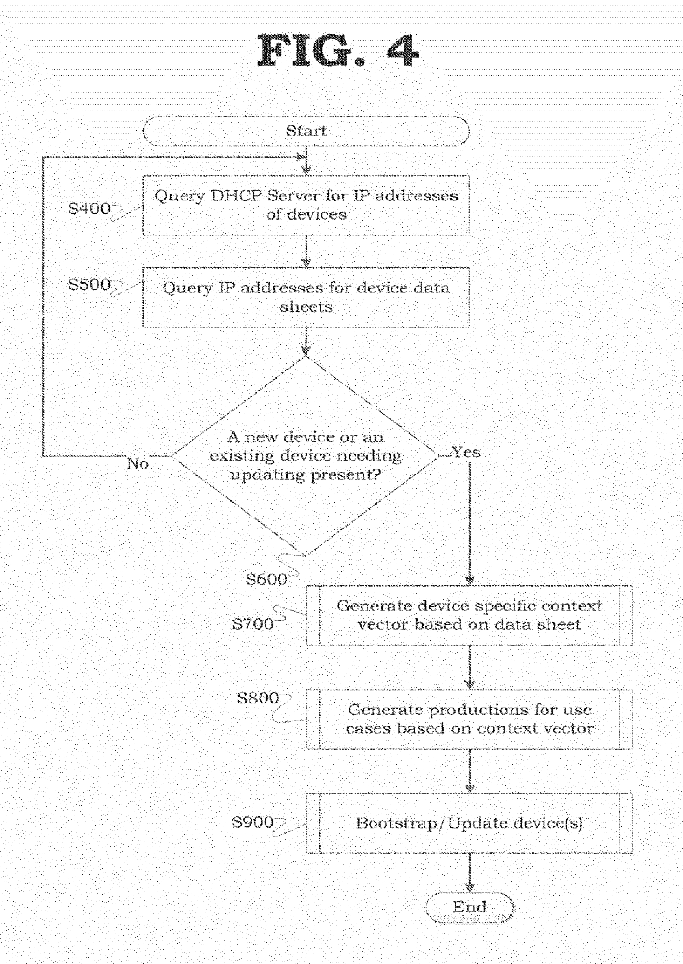

FIG. 4 is a flowchart illustrating a method of automatically configuring a device for an environment according to some example embodiments.

Referring to FIG. 4, as discussed in more detail below, the remote server 400 may bootstrap a newly added device 100 and/or update an existing device 100 by determining whether the device 100 is new to the environment and/or needs updating, and, if so, the remote server 400 may bootstrap the new and/or update the existing device 100.

Further, the remote server 400 may determine whether the changes to the device 100 may affect (e.g., mutual data connections) other ones of the devices 100, and, if so, may update these other devices 100. For example, the device context vector has links to agiles, and these agiles may specify that other devices 100 have to be configured also for the data connections to be established. Then, during building the configuration of a device 100, the device context vectors of such other devices 100 are linked to the agiles, which in turn allows the remote server 400 to detect which other devices 100 require changes to keep mutual data connections up-to-date.

The remote server 400 may automatically detect devices 100 on the hospital network, auto calculate actions to perform on the detected devices 100, generate productions for this device and execute the productions on the hospital network to accomplish and complete the actions in a fully automated manner, which may reduce (or, alternatively, eliminate) manual operations.

In operation S400, the remote server 400 may query the DHCP server 200 for a list of the devices 100 associated with the environment. For example, the remote server 400 may instruct the onsite server 300 to request a list of IP addresses of the devices 100 from the DHCP server 200, and to transmit the list to the remote server 400.

In operation S500, the remote server 400 may query each of (or, alternatively, only new) the devices 100 for their respective device data sheets using the obtained list of IP addresses. In some example embodiments, the remote server 400 may first compare the list of IP addresses against a prior list, if such a prior list exists, and may only query the new devices 100 for their respective data sheets.

For example, the remote server 400 may attempt to obtain the data sheet by attempting to establish a connection with the device 100 using various device connectivity options obtained the domain repository, and store the data sheet and which of these connectivity option(s) yielded the data sheet.

While FIG. 4 illustrates an example embodiment in which the remote server 400 automatically explores the environment to actively look for devices 100, example embodiments are not limited thereto. For example, in other example embodiments, the remote server 400 may receive a list of IP addresses associated with the devices 100 from a user, for example, an IT administrator of the environment.

Still referring to FIG. 4, in operation S600, the remote server 400 may determine whether any of the devices 100 are new to the environment and/or need updating within the environment.

For example, the remote server 400 may detect that one of the devices 100 is new when, for example, an IP address associated with the device 100 is unknown to the remote server 400, such as when the IP address is not stored in the equipment repository.

The remote server 400 may determine whether to update one of the devices 100 when, for example, the data sheet of an existing device 100 has changed. For example, the remote server 300 may detect a change in the datasheet by comparing the current results of a datasheet exploration against the previous results. Further, the remote server 400 may detect the need to update a first one of the devices 100 when a second one of the devices 100 connected thereto has a change in their respective data sheet, and the first and second devices 100 are co-dependent on each other. Other reasons for updating the devices 100 may be, for example, new or changed agiles (e.g., if an agile now requires secure TCP connections instead of insecure TCP connections, then the devices 100 that are linked to this agile are automatically updated).

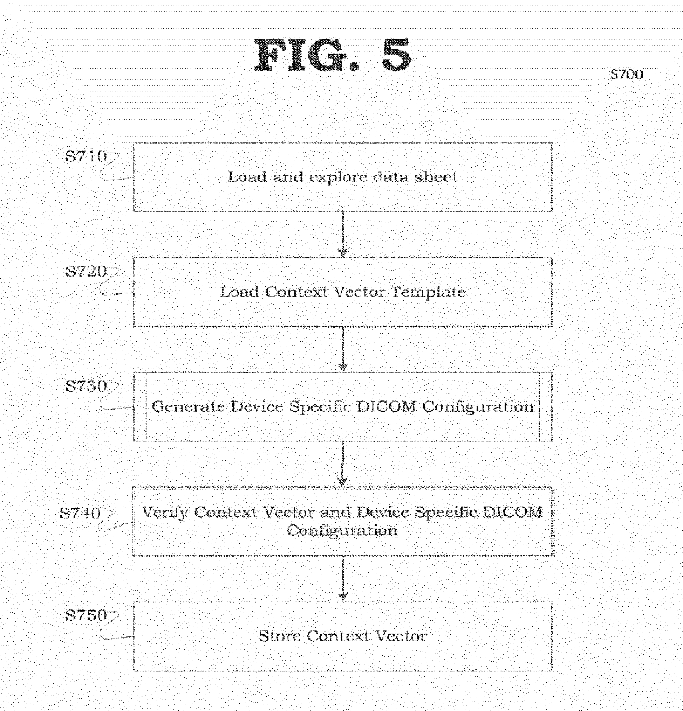

In operation S700, as discussed in more detail below with reference to FIG. 5, if the remote server 400 determines that one of the devices 100 is new or needs updating, the remote server 400 may generate a device specific context vector for the device 100 based on the data sheet associated with the device 100.

The device specific context vector may be an (extensible Markup Language) XML data structure containing details regarding the device 100 (e.g., device type, unique device identifier, device's IP address, link to the device data sheet, link to the connectivity option to load the data sheet from the device 100, links to agiles that are defined for the device 100, links to productions that have been generated for the device 100, links to (e.g., DICOM) connection configuration data structures that have been generated for the device 100 used for recognizing each device uniquely and capturing the outcomes of automated actions on the device 100), thus enabling of the automatic processing of the device 100. Therefore, by generating the device specific context vector, the remote server 400 may enable the automatic execution of agiles (e.g., use cases, tasks, and operations) on the device 100.

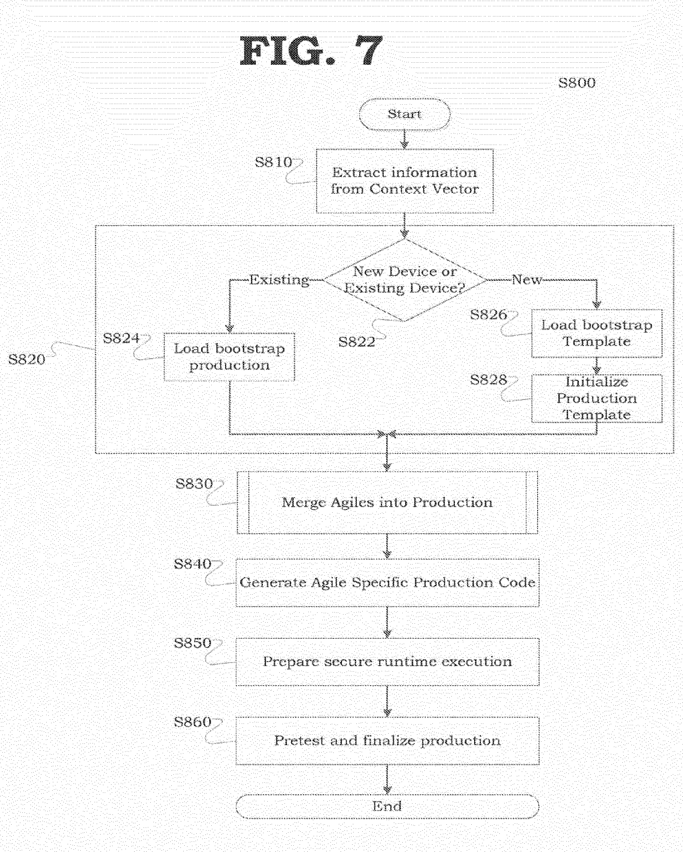

In operation S800, as discussed in more detail below with reference to FIG. 7, the remote server 400 may generate productions for use cases based on the generated context vector.

The production may be a data structure with a generated unique identifier, links to one or more agiles, links to the context vector that owns the production, links to source code to start the execution of the production, status information for the production (e.g., test status such as pass or fail) used for preparing the automatic execution of operations on devices, which in turn make the devices pluggable in terms of data connections and data exchange with other devices. Therefore, by generating the production, the remote server 400 may automatically execute the defined operations to, for example, bootstrap and/or update the connections for data exchange between the device 100 and other ones of the devices 100 on the network.

In operation S900, the remote server 400 may perform a bootstrapping operation on the new device 100 or update the existing device 100.

For example, to bootstrap or update the device 100, the remote server 400 (e.g., the production manager) may load the production generated by the compliance engine, and send the production to the onsite server 300 within the hospital network. The onsite server 300 may execute the production on the hospital network by, for example, running the source code for the bootstrapping agile within the production, which stores the generated DICOM configuration from the device context vector within the production to the device 100.

FIG. 5 is a flowchart illustrating a method of generating a device specific context vector according to example embodiments.

Referring to FIG. 5, as discussed above, in operation S700, the remote server 400 may generate the device specific context vector, which may be an XML data structure containing details regarding the device 100 used to enable the automatic execution of agiles (e.g., use cases, tasks, and operations) on the device 100. In some example embodiments, operation S700 may include operation S710-S750, discussed below.

In operation S710, the remote server 400 may load and parse the data sheet associated with the device 100 for information.

The remote server 400 may load the data sheet from the equipment repository. The remote server 400 may compile information, for example, the device type, manufacturer, and serial number of the device 100 from the data sheet.

Further, the remote server 100 may utilize the device type, manufacturer and serial number to search for further information in the repositories about the device 100 itself, such as a template file (e.g., a schema file) for the device context vector and additional source code.

Further, the remote server 400 may load other information, such as the type and details of data connections that the device requires (e.g., DICOM Service-Object Pair (SOP) classes that are cross-vendor standardized, and machine readable data structures that describe capabilities of the device 100 for DICOM data transfer across devices) from the data sheet to generate data structures for data exchange on a DICOM configuration.

Other parts for the DICOM configuration, such as unique logical DICOM name (known as an Application Entity Title (AET)), network connections, may be generated, according to the DICOM standard, from the device's IP address and DICOM AETs in the context vectors of other devices. Such changes may cause changes to the DICOM configuration in the context vectors of the other devices 100, which are marked for update then.

In operation S720, the remote server 400 may load the context vector template from the domain repository. The template may have the layout as described above for the context vector but without the associated data.

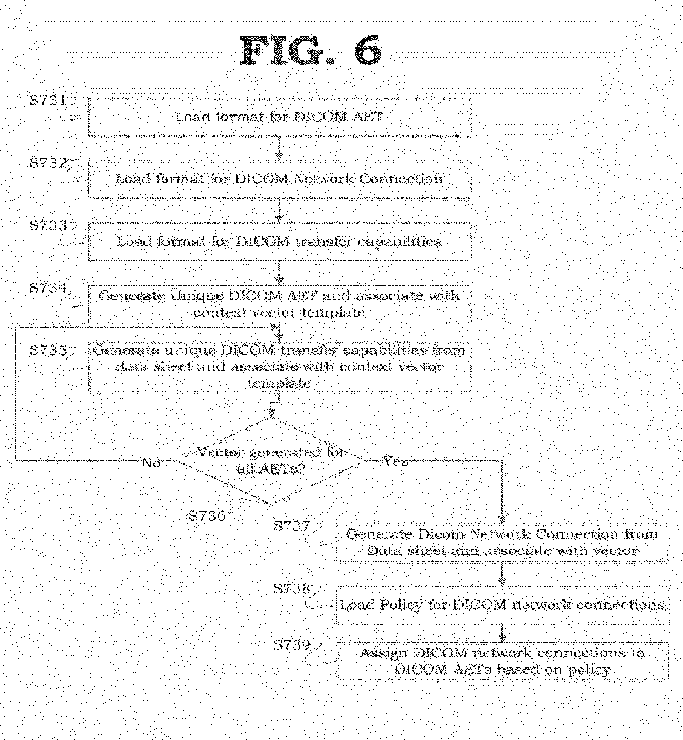

In operation S730, as discussed in more detail below with reference to FIG. 6, the remote server 400 may generate the device specific DICOM configuration. The device's specific DICOM configuration may enable the device 100 to exchange data with other devices 100.

In operation S740, the remote server 400 may verify the context vector and the device specific DICOM configuration.

For example, the remote server 400 may check (i) if desired (or, alternatively, mandatory) data fields and links contain values, (ii) if the agiles are linked to the context vector defined for the type of the device 100, (iii) if all other devices 100 that co-depend on the device 100, according to DICOM standard, have been marked for update, and/or (iv) if the DICOM configuration of the device 100 contains (e.g., all) DICOM transfer capabilities specified in the device's data sheet. However, example embodiments are not limited thereto, and the remote server 400 may verify whether the context vector and device specific DICOM configuration using various methods.

In operation S750, the remote server 400 may store the context vector associated with the device 100. For example, the remote server 400 may store the context vector in the equipment repository, and use the stored context vector to generate productions in operation S800.

FIG. 6 is a flowchart illustrating a method of generating device specific DICOM configuration according to at least some example embodiments.

Referring to FIGS. 5 and 6, as discussed above, in operation S730, the remote server 400 may generate the device specific DICOM configuration to automatically update the DICOM configuration of the device 100, and enable automatic updating of the DICOM configuration of other devices 100, if desired. In some example embodiments, operation 730 may include operation S731-S739, discussed below.

In operation S731, the remote server 400 may load the format of an Application Entity Title (AET), which is a logical device name defined by the DICOM standard, the format for the generation of the AET may be stored in the domain repository, such that the remote server 400 may automatically generate a unique AET for the device 100, as required by the DICOM standard.

In operation S732, the remote server 400 may load the format for a network connection. For example, the remote server 400 may load an XML code snippet with the structure (format) of a DICOM network connection with an IP address.

In operation S733, the remote server 400 may load the DICOM structure for transfer capabilities. For example, the remote server 400 may load an XML snippet with the format of the transfer capabilities with, for example, Service-Object Pair (SOP) class and the AET of the other device to communicate with peer AET, as defined by the DICOM standard.

In operation S734, the remote server 400 may generate a unique AET and link the generated unique AET with the context vector template loaded in operation S720, which is discussed supra.

In operation S735, the remote server 400 may generate the context vector by generating unique transfer capabilities by inserting the data required by the DICOM standard into the DICOM structure for DICOM transfer capabilities, and link the generated unique transfer capabilities with the context vector template loaded in operation S720, which is discussed supra.

In operation S736, the remote server 400 may determine whether context vectors have been generated for all of the AETs.

As per the DICOM standard, multiple AETs may be defined and stored in the domain repository. The hospital's AET policy for the device type associated with the device 100 may specify if one (default) or multiple AETs are utilized to define the device 100, and how the DICOM standard is to be applied for each of the generated multiple AETs (e.g., what DICOM SOP classes each AET supports). If the remote server 400 determines that the context vectors have not been generated for all of the AETS, the remote server 400 may proceed back to operation S735 and perform operation S730 again for another AET.

If, in operation S736, the remote server 400 determines that all of the vectors have been generated, then in operation S737, the remote server 400 may generate a DICOM network connection from the data sheet, and may link the same with the context vector. For example, the remote server 400 may determine a port number to establish a connection with the device 100 based on the data sheet associated with the device 100 and Internet Assigned Numbers Authority (IANA) list of standardized port numbers associated with the transfer capabilities of the device 100.

In operation S738, the remote server 400 may load a hospital specific policy associated with the network connections from the domain repository, which may contain default or alternative TCP ports to be used, or the number of AETs allowed per device type.

In operation S739, the remote server 400 may assign the network connections to the AETs based on the policy loaded in operation S738 and based on the DICOM configuration data structures.

FIG. 7 is a flowchart illustrating a method of generating productions for use cases based on a context vector according to at least some example embodiments.

Referring to FIGS. 4 and 7, as discussed above, in operation S800 of FIG. 4, the remote server 400 may generate a bootstrap production for a concrete device from the context vector to prepare data structures and source code to bootstrap a new device and/or update depending devices 100 (if any) accordingly. In some example embodiments, operation S800 may include operations S810-S860.

In operation S810, the remote server 400 may load the context vector from the memory 220 associated with the remote server 400, and may extract information from the context vector.
For example, the processor 230 of the remote server 400 may execute code that configures the compliance engine to retrieve the context vector associated with the device 100 from the equipment repository, and extract the device type (e.g., "CT scanner") and device name (e.g., "CT_1") from the context vector.

In operation S820, the remote server 400 may load the bootstrap production associated with the device 100.

For example, in operation S822, the remote server 400 may determine whether the device 100 is an existing device or is a new device. In operation S824, if the remote server 400 determines that the device 100 is an existing device, the remote server 400 (or, alternatively, the compliance engine of the remote server 400) may load an existing bootstrap production to update the device 100. Alternatively, if the remote server 400 determines that the device 100 is a new device, the remote server 400 (or, alternatively, the compliance engine of the remote server 400) may load a bootstrap template from the domain repository in operation S826, and initialize a production template for the new device 100 in operation S828. For example, the production template may have a unique production template name (e.g., bootstrap_CT_CT_1) and may include the device type and device name from the device context vector.

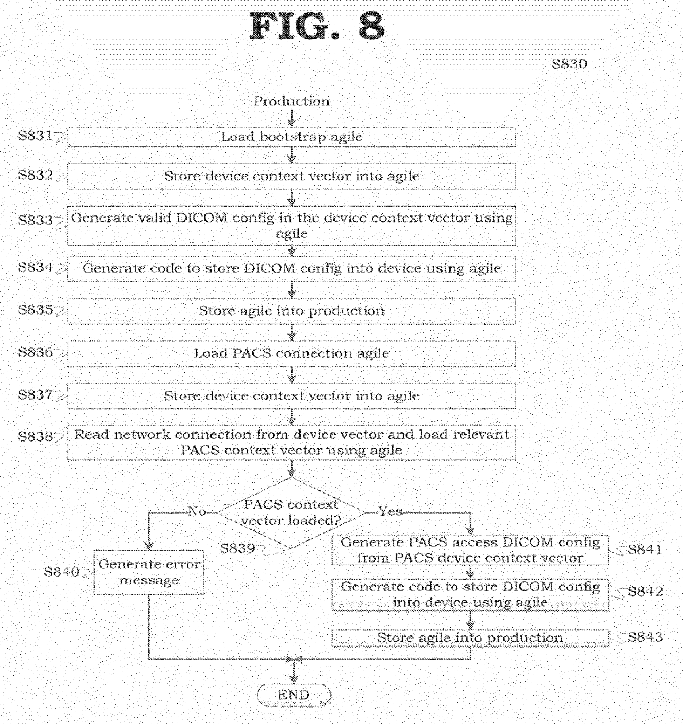

In operation S830, the remote server 400 (or, alternatively the compliance engine of the remote server 400) may merge agiles into the production. The production template (e.g., for device bootstrap) contains a list of agile type names that are to be filled in during the generation of the production for a dedicated device. The templates for these agile types are loaded for the given device type and are linked to the new production. Details on the remote server 400 merging the agiles into the production will be discussed below with reference to FIG. 8.

In operation S840, the remote server 400 may generate agile specific production code. For example, a bootstrap agile for a CT device may generate source code that uploads the generated DICOM configuration from the device context vector to the device, based on the connectivity options that were detected for the CT device.

In operation S850, the remote server 400 may prepare secure runtime execution. For example, based on the hospital's security policy extracted from the domain repository, the remote server 400 may copy required accounts, public keys, etc. obtained from the agiles, to source code, and the source code may be complied into to a set of files that can be executed in the hospital environment.

In operation S860, the remote server 400 may pre-test and finalize the production. For example, the remote server 400 may execute the resulting source code in a test environment in the cloud 500 where the devices 100 are mocked, to determine if the source code is executable within the hospital environment. The remote server 400 may mark the production e.g. 'tested ok', but 'not executed yet'. Also, the productions of depending devices 100 may be marked for update, with a back-reference to this new production.

FIG. 8 illustrates a method of merging agiles into a production according to some example embodiments.

Referring to FIGS. 7 and 8, in operation S830, the remote server 400 may merge agiles into a production via operations S831-S843.

In operation S831, the remote server 400 may load the bootstrap agile for the target device type from the connections repository, where the bootstrap production is configured to fill-out a bootstrap agile.

In operation S832, the remote server 400 may store the loaded context vector (which is already part of the production) such that the loaded context vector is linked to the bootstrap agile, because the bootstrap agile is defined to work on one device context vector of a dedicated device type.

In operation S833, depending on the type of the agile, the remote server 400 may generate and/or update the DICOM configuration in the device context vector using the agile.

In operation S834 the remote server 400 may generate the source code for DICOM configuration upload using the bootstrap agile based on the connectivity option to be used to upload the DICOM configuration, which was determined based on the data sheet).

In operation S835, the remote server 400 may store the copy of bootstrap agile such that the bootstrap agile is linked to the production.

In operation S836, the remote server 400 may load the PACS connection agile for the PACS device type from the connections repository to allow the bootstrap production to fill-out a PACS connection agile.

In operation S837, the remote server 400 may also store the loaded device specific (e.g., CT device) context vector (which is already part of the production) such that the device specific context vector is linked the to the PACS connection agile, if the agile indicates that a connection between different devices is needed.

In operation S838, the remote server 400 may load the PACS device context vector, read DICOM network connection and AET from PACS context vector, and read the DICOM network connection and the AET to prepare DICOM configuration updates.

In operation S839, the remote server 400 may determine whether the PACS context vector is loaded.

In operation S840, if the remote server 400 determines that the PACS context vector is not loaded, the remote server 400 may generate an error message which can be followed-up by the human IT administrator.

In operation S841, if the remote server 400 determines that the PACS context vector is loaded, the remote server 400 may generate or update the DICOM configuration in the device context vectors. For example, for the DICOM connection to a PACS device from the CT device, the remote server 400 may generate or update the DICOM configuration in the CT device to connect to this PACS device, and also update the DICOM configuration of the PACS device to connect to the new CT device, as described in more detail above, according to the DICOM standard.

In operation S842, the remote server 400 may generate, in the PACS connection agile, for example, the source code for DICOM configuration upload to PACS based on the connectivity option to be used to upload DICOM configuration (which was part of the device's data sheet).

In operation S843, the remote server 400 may store the PACS connection agile such that the PACS connection agile is linked to the production.

As discussed above, by generating the production, the remote server 400 may enable the smart plug-ability of devices 100, and the core are these new structures with source code and data (agiles, device context vectors, productions) and these new components (compliance engine, production manager and the repositories). For example, for each use case or maintenance task, at least one agile template is pre-configured. For each device type, at least one device context vector template is pre-configured. For each combination of agile and device type, at least one production template is pre-configured. Therefore, the remote server 400 may enable the fully automated smart plug-ability of the devices 100.

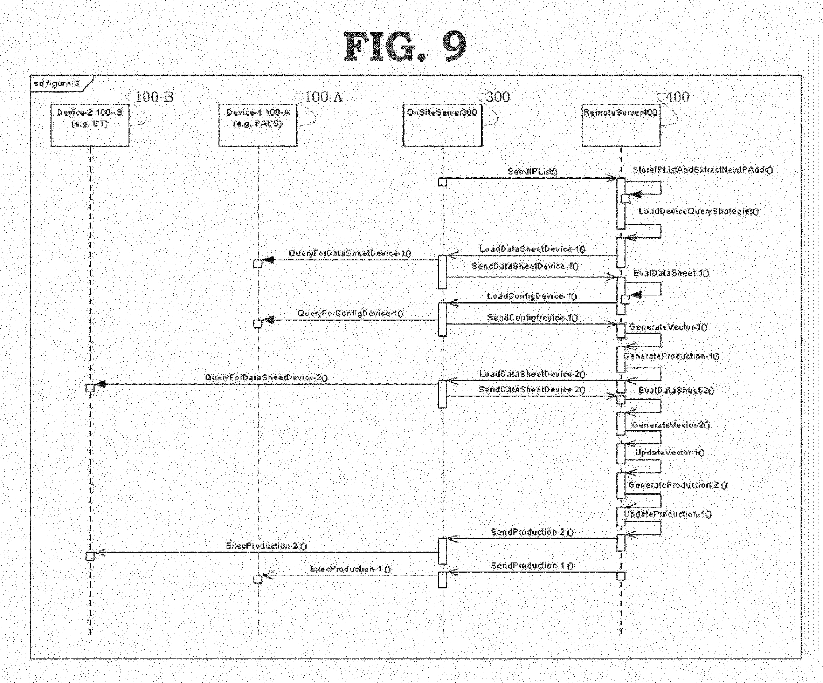

FIG. 9 is a signal flow diagram illustrating an example of a method of automatically bootstrapping and updating devices according to at least some example embodiments.

Referring to FIGS. 4 and 9, FIG. 9 will be discussed with regard to an example in which a first device 100-A may exist on the network, but be unknown to the remote server 400, and thus, may need to be updated, and a second device 100-B may be new to the network, and, thus, may need to be bootstrapped into the network. Further, upon introducing the second device 100-B into the network, the first device 100-A may also need to be updated due to a co-dependence between the first device 100-A and the second device 100-B.

The first device 100-A may be a picture archiving and communication system (PACS), and the second device may be a computed tomography (CT) device. However, example embodiments are not limited thereto.

As discussed with reference to FIG. 4, in operation S400, the remote server 400 may instruct the onsite server 300 to request a list of IP addresses of the devices 100 from the DHCP server 200, and to transmit the list to the remote server 400. In response to a SendIPList () function, the remote server 400 may receive the IP addresses from the onsite server 300. Alternatively, in other example embodiments, rather than automatically receive the list of IP addresses, the remote server 400 may receive a list of IP addresses associated with the devices 100 from a user, for example, an IT administrator of the environment.

During a StoreIPlistAndExtractNewIPAddr() function, the remote server 400 (e.g., the compliance engine) may match the IP addresses against known addresses stored in the memory 220 of the remote server 400 (e.g., the connections repository), and calculate a difference therebetween. In the present example, the remote server 400 may determine that the IP addresses associated with the first device 100-A and the second device 100-B are new (unknown) to the remote server 400.

As discussed with reference to FIG. 4, in operation S500, the remote server 400 may query each (or, alternatively, only new ones) of the devices 100 for their respective device data sheets using the obtained list of IP addresses and various connectivity options, and store the data sheet and which of connectivity option(s) yielded the data sheet.

For example, during the LoadDeviceQueryStrategies () function, the remote server 400 (e.g., the compliance engine) may load the strategies and options, stored in executable code, from the memory 220 (e.g. the domain repository), to query for the data sheets from the devices 100.

During the LoadDataSheetDevice-1 () function, the remote server 400 may instruct the onsite server 300 to execute the strategies for loading data sheets from the first device 100-A within the hospital environment. During the QueryforDataSheetDevice-1 () function, the onsite server 300 may query the first device 100-A for the data sheet, and may successfully obtain the data sheet from the first device 100-A. During the SendDataSheetDevice-1 (), the onsite server 300 may transmit the obtained data sheet for the first device 100-A to the remote server 400.

As discussed above with reference to FIG. 4, in operation S600, the remote server 400 may determine whether any of the devices 100 are new to the environment and/or need updating within the environment.

For example, during the EvalDataSheet-1 () function, the remote server 400 (e.g., the compliance engine) may parse the data sheet of the first device 100-A for information, detect that the first device 100-A is a PACS with DICOM connections, and store this information in the memory 220 (e.g., the equipment repository).

The remote server 400 may determine whether the device 100-A is a new to the environment and/or need updating within the environment based on the stored information.

For example, in the present case the first device 100-A is a PACS that ordinarily may already be installed within the hospital environment. Therefore, during the LoadConfigDevice-1() function, the remote server 400 may instruct the onsite server 300 to execute strategies, stored in executable code, for loading DICOM configurations from the first device 100-A. During the QueryforConfigDevice-1 () function, the onsite server 300 may execute queries on the first device 100-A to discover the DICOM configuration associated the first device 100-A, and successfully load the same. During the SendCon-figDevice-1 () function, the onsite server 300 may transmit the discovered DICOM configuration to the remote server 400.

As discussed above with reference to FIG. 4, in operation S700, the remote server 400 may generate a device specific context vector for the first device 100-A based on the data sheet associated with the first device 100-A.

During the GenerateVector-1 () function, the remote server 400 (e.g., the compliance engine) may generate the device specific context vector for the first device 100-A using the data sheet for the first device 100-A stored in the memory 220 (e.g., the equipment repository), and re-using the existing discovered DICOM configuration for the first device 100-A.

As discussed above with reference to FIG. 4, in operation S800, the remote server 400 may generate productions for use cases based on the generated context vector.

During the GenerateProduction-1 () function, the remote server 400 (e.g., the compliance engine) may use the context vector for the first device 100-A to generate the bootstrap production for the first device 100-A, and store the same to the memory 220.

Since, as discussed above, the first device 100-A is a PACS that is already operating within the network (but previously unknown to the remote server 400), the remote server 400 may not need to execute the bootstrap production on the first device 100-A at this time since the first device 100-A is up-to-date.

As discussed below, operations S500 to S800 may be repeated for the second device 100-B, however, since the second device 100-B is new to the hospital environment, and thus, does not have DICOM configurations stored thereon, the second device 100-B may need to be bootstrapped into the hospital environment. Further, upon bootstrapping the second device 100-B into the hospital environment, the first device 100-A may need to be updated since there may exist a co-dependency between the first device 100-A and the second device 100-B.

In operation S500, during the LoadDataSheetDevice-2 () function, the remote server 400 may instruct the onsite server 300 to execute the strategies for loading data sheets from the second device 100-B within the hospital environment. During the QueryforDataSheetDevice-2 () function, the onsite server 300 may query the second device 100-B for the data sheet, and may successfully obtain the data sheet from the second device 100-B. During the SendDataSheetDevice-2(), the onsite server 300 may transmit the obtained data sheet for the second device 100-B to the remote server 400.

During the EvalDataSheet-2() function, the remote server 400 (e.g., the compliance engine) may explore the data sheet of the second device 100-B, detect that the second device 100-B is, for example, a CT scanner with DICOM connections, and store this information in the memory 220 (e.g., the equipment repository).

During the GenerateVector-2 () function, the remote server 400 (e.g., the compliance engine) may generate the device specific context vector for the second device 100-B using the data sheet for the second device 100-B stored in the memory 220 (e.g., the equipment repository).

Unlike the aforementioned example for the first device 100-A, since the second device 100-B is a new device, the remote server 400 may need to generate and execute bootstrap productions associated with the first device 100-A and the second device 100-B.

During the UpdateVector-1 () function, because the DICOM AET associated with the second device 100-B may need to access the first device 100-A (e.g., the PACS system), the context vector associated with the first device 100-A may be loaded and the DICOM configuration therein may be updated to include information associated with the second device 100-B.

During the GenerateProduction-2 () function, the remote server 400 (e.g., the compliance engine) may use the context vector for the second device 100-B to generate the bootstrap production for the second device 100-B, and store the same to the memory 220.

During the UpdateProduction-1 () function, the remote server 400 (e.g., the compliance engine) may use the context vector of the first device 100-A to update the bootstrap production for the first device 100-A such that the bootstrap production contains the connection information for the second device 100-B, and store the results to the memory 220.

During the SendProduction-2 () function, the remote server 400 (e.g., the production manager) may instruct the onsite server 300 to bootstrap the second device 100-B using the generated production (e.g., the source code therein) associated with the second device 100-B. During the ExecProduction-2 () function, the onsite server 300 may execute the code in the production for the second device 100-B, and thereby upload the DICOM configuration to the second device 100-B to bootstrap the same with the DICOM configuration.

During the SendProduction-1 () function, the remote server 400 (e.g., the production manager) may instruct the onsite server 300 to bootstrap the first device 100-A using the generated production (e.g., the source code therein) associated with the first device 100-A that includes the updated connections associated with the second device 100-B. During the ExecProduction-1 () function, the onsite server 300 may execute the code in the production for the first device 100-A, and thereby upload the DICOM configuration to the first device 100-A to bootstrap the same with the DICOM configuration.

As discussed above, by generating the production, the remote server 400 may enable the smart plug-ability of the first device 100-A and the second device 100-B.

The foregoing description has been provided for purposes of illustration and description. It is not intended to be exhaustive or to limit the disclosure. Individual elements or features of a particular example embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A method for automatically configuring data connections, comprising:
- generating (S700) a device specific context vector for a device (100) based on a data sheet associated with the device and agiles;
- generating (S800) a production based on the device specific context vector; and
- automatically configuring (S900) data connections associated with the device (100) based on the device specific context vector and the production, the data connections enabling the device (100) to communicate in a network.

2. The method of claim 1, wherein the production contains source code executable within an environment associated with the device (100) to configure the data connections.

3. The method of claim 2, wherein the source code is executable by an onsite server (300) within the environment, the source code instructing the onsite server (300) to perform tasks associated with configuring the data connections.

4. The method of claim 2, wherein the source code is executable directly on the device (100) within the environment by opening at least one port on the device (100) to allow remote access by one of an onsite server (300) and a remote server (400).

5. The method according to one of the preceding claims, wherein
the device specific context vector is a vector that bundles information to an instance associated with the device (100), the information including parameters that identify the device (100) and configure the data connections associated with the device (100), and
the agiles are a declaration of tasks associated with performing an operation on a device type associated with the device (100).

6. The method of claim 5, wherein the declaration of tasks are established for the device type and the operation prior to generating the device specific context vector.

7. The method according to one of the preceding claims, wherein the automatically configuring includes updating device specific context vectors for other devices (100) that depend on the device (100).

8. The method according to one of the preceding claims, further comprising:
- querying (S400) a Dynamic Host Configuration Protocol (DHCP) server (200) for a list of addresses associated with devices (100);
- determining whether to configure the data connections associated with the device (100) based at least on the list of addresses; and
- querying (S500) the device (100) for the data sheet, if the determining determines to configure the data connections associated with the device (100).

9. The method according to one of the preceding claims, further comprising:
- receiving the data sheet from the device (100);
- storing the data sheet in a memory; and
- analyzing the data sheet to determine at least a device type associated with the device (100) and data connectivity types supported by the device (100), wherein
the generating generates the device specific context vector based on the device type and the data connectivity types determined from the data sheet.

10. The method according to one of the preceding claims, further comprising:
- automatically determining which of a plurality of connectivity options yields the data sheet from the device (100); and
- further analyzing the data sheet to determine remote communication standards including one or more of data types, message types, and operations supported by the device (100).

11. A configuration system for automatically configuring data connections, comprising:
a processor (230); and
a memory (220) configured to store computer readable code therein that, when executed by the processor, configures the processor to,
generate a device specific context vector for a device (100) based on a data sheet associated with the device (100) and agiles;
generate a production based on the device specific context vector; and
automatically configure data connections associated with the device (100) based on the device specific context vector and the production, the data connections enabling the device (100) to communicate in a network.

12. The configuration system according to claim 11, furthermore configured to execute the method according to one of the claims 2 to 10.

13. A computer program product comprising program elements which induce a configuration system to carry out the steps of the method for automatically configuring data connections according to one of the claims 1 to 10, when the program elements are loaded into a memory (220) of the configuration system.

14. A computer-readable medium on which program elements are stored that can be read and executed by a configuration system, in order to perform steps of the method for automatically configuring data connections according to one of the claims 1 to 10, when the program elements are executed by the configuration system.
